(19) Europäisches Patentamt
European Patent Office
Office européen des brevets

(11) **EP 4 546 586 A1**

(12) **EUROPEAN PATENT APPLICATION**
published in accordance with Art. 153(4) EPC

(43) Date of publication:
**30.04.2025 Bulletin 2025/18**

(21) Application number: 23827509.3

(22) Date of filing: **21.06.2023**

(51) International Patent Classification (IPC):
***H02G 15/184*** (2006.01) ***H01B 9/02*** (2006.01)

(52) Cooperative Patent Classification (CPC):
**C08K 3/04; C08K 3/14; C08K 3/22; C08L 23/16;**
**C08L 83/04; H01B 3/30; H01B 7/14; H01B 9/00;**
**H01B 9/02; H01R 4/20; H02G 15/184**

(86) International application number:
**PCT/KR2023/008590**

(87) International publication number:
**WO 2023/249399 (28.12.2023 Gazette 2023/52)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **21.06.2022 KR 20220075474**
**20.06.2023 KR 20230079091**

(71) Applicant: **LS Cable & System Ltd.**
**Anyang-si, Gyeonggi-do 14119 (KR)**

(72) Inventors:
• YUN, Ho Jung
  **Paju-si Gyeonggi-do 10888 (KR)**
• SON, Si Ho
  **Daegu 41213 (KR)**
• LEE, Woong Yup
  **Hongseong-gun Chungcheongnam-do 32234**
  **(KR)**

(74) Representative: **K&L Gates LLP**
**Karolinen Karree**
**Karlstraße 12**
**80333 München (DE)**

(54) **DIRECT-CURRENT POWER CABLE SYSTEM**

(57) The present invention relates to a direct-current power cable system. More specifically, the present invention relates to a direct-current power cable system capable of preventing or minimizing electric field distortion due to a local electric field concentration and insulation breakdown of a cable joint box by alleviating the electric field of a portion where space charges are excessively accumulated inside a sleeve member of an intermediate connection structure of an ultra-high voltage direct-current power cable.

[FIG. 6]

EP 4 546 586 A1

# Description

## [Technical Field]

The present invention relates to a direct-current power cable system. More specifically, the present invention relates to a direct-current power cable system capable of alleviating an electric field in a portion where space charges excessively accumulate inside a sleeve member of an ultra-high voltage direct-current power cable system, thereby preventing or minimizing electric field distortion and insulation breakdown of a cable joint box due to local electric field concentration.

## [Background Art]

In general, in large-scale power systems where large capacity and long-distance transmission are required, high-voltage transmission to increase transmission voltage is essential from the perspectives of reducing power loss, addressing construction site issues, and increasing transmission capacity.

Transmission methods may be broadly divided into alternating-current transmission and direct-current transmission, among which direct-current transmission refers to the transmission of power using a direct-current method. Specifically, the direct-current transmission first converts alternating-current power on a transmission side to an appropriate voltage, then transforms it into direct current through a forward conversion device, and transmits it to the receiving side via a transmission line. On the receiving side, a reverse conversion device then converts the direct-current power back into alternating-current power.

In particular, the direct-current transmission offers advantages in transporting large-capacity power over long distances and enables interconnection of asynchronous power systems. Additionally, in long-distance transmission, direct current offers advantages in having lower power loss and higher stability compared to alternating current.

The ultra-high voltage direct-current power cables used in the direct-current power transmission, known as the high voltage direct-current cable (HVDC cable), are installed and interconnected by units of several tens to hundreds of meters through a cable joint box.

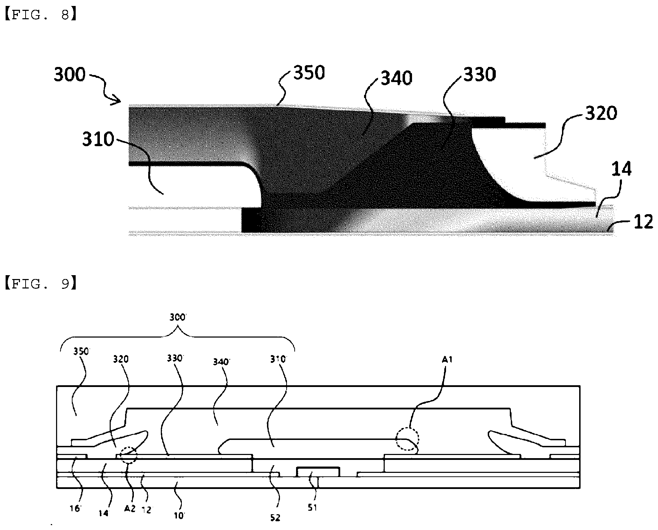

FIG. 9 illustrates an example of a direct-current power cable system according to conventional technology.

As illustrated in FIG. 9, a general direct-current power cable system may be configured to include a first electrode 310' disposed on a conductor connection portion of a pair of direct-current power cables, a pair of second electrodes 320' disposed facing each other, an electric field alleviation layer 330' connected to the first electrode 310' and the pair of second electrodes 320' and configured with a dedicated rubber insulating material, a rubber insulating layer 340' provided to surround the electric field alleviation layer 330', and a sleeve member 300' provided with a sleeve shielding layer 350' disposed to surround the rubber insulating layer.

The electric field alleviation layer 330' is configured from a thermosetting rubber resin containing a filler material that induces nonlinear electrical behavior according to a specific electric field. Under normal operating conditions, the electric field alleviation layer 330' operates as an insulating layer with sufficiently high resistance; however, when space charges accumulate and an excessive electric field form, the resistance of the electric field alleviation layer 330' nonlinearly decreases, allowing charges to dissipate along the electric field alleviation layer 330' toward the second electrode 320' and an outer semiconductive layer 16. This process relieves the accumulation of space charges, thereby preventing insulation breakdown caused by electric field concentration.

However, in the sleeve member 300' of the conventional direct-current power cable system illustrated in FIG. 9, excessive accumulation of space charges tends to occur particularly at an edge end region A1 of the first electrode 310', which is a high-voltage electrode, or at a region A2 where the second electrode 320' and the electric field alleviation layer 330' make contact. The space charges distort the electric field within the insulating layer 14' of the power cable or the rubber insulating layer 340' of the sleeve member 300', causing electric field concentration, which may lead to insulation breakdown.

If the electric field alleviation layer is absent in the power cable system illustrated in FIG. 9, electric field concentration intensifies at the heterogeneous interface between an insulating layer 16' of the power cable and the rubber insulating layer 340'. Additionally, a triple point is formed at a region where the insulating layer 16' of the power cable, the rubber insulating layer 340' of the sleeve member, and the second electrode 320' meet, thereby increasing the possibility of insulation breakdown.

Further, as illustrated in FIG. 9, when the electric field alleviation layer 330' is provided, a heterogeneous interface is not formed between the insulating layer 16' of the power cable and the rubber insulating layer 340' of the sleeve member. However, a heterogeneous interface still exists between the insulating layer 16' of the power cable and the electric field alleviation layer 330' of the sleeve member or between the electric field alleviation layer 330' and the rubber insulating layer 340' of the sleeve member 300. Additionally, a triple point is formed at the region where the electric field alleviation layer 330', the rubber insulating layer 340', and the second electrode 320' of the sleeve member 300 meet, existing a potential for insulation breakdown.

In addition, while the electric field alleviation layer 330' performs the function of alleviating electric field concentration within the sleeve member 300', the manufacturing process of the electric field alleviation layer 330' is relatively complex, and the filler contained in the electric field alleviation layer 330' is costly. Consequently, when the size of the electric field alleviation layer 330' within the sleeve member 300' is expanded, the manufacturing process becomes more challenging, and the cost of the cable joint box increases.

Therefore, a direct-current power cable system is required that may alleviate electric field concentration in portions of the sleeve member of an ultra-high voltage direct-current power cable where space charges excessively accumulate, thereby preventing or minimizing electric field distortion and reduction in direct-current dielectric strength due to space charge accumulation.

**[Disclosure]**

**[Technical Problem]**

The present invention is directed to providing a direct-current power cable system that alleviates electric field concentration in portions of the sleeve member of an ultra-high voltage direct-current power cable system where space charges excessively accumulate, thereby preventing or minimizing electric field distortion and reduction in direct-current dielectric strength due to space charge accumulation.

**[Technical Solution]**

To solve the aforementioned objects, the present invention is directed to providing a direct-current power cable system, comprising: a pair of direct-current power cables, each including a conductor, an inner semiconductive layer surrounding the conductor, an insulating layer surrounding the inner semiconductive layer, and an outer semiconductive layer surrounding the insulating layer, wherein cable connection regions in which the conductor, the insulating layer, and the outer semiconductive layer are sequentially exposed are disposed to face each other; a cable joint box connecting the pair of direct-current power cables, the cable joint box including: a conductor connection portion configured to connect the conductors of the pair of direct-current power cables; a sleeve member mounted to surround the conductor connection portion and the cable connection regions; and a housing accommodating the sleeve member, in which the sleeve member may include: a first electrode disposed to surround the conductor connection portion and electrically connected to the conductor connection portion; a pair of second electrodes each provided on both sides of the first electrode along a cable length direction; an electric field alleviation layer surrounding the first electrode, at least a portion of the pair of second electrodes, and the insulating layer, wherein at least a portion of the electric field alleviation layer is disposed between the second electrode and the outer semiconductive layer so that the second electrode and the outer semiconductive layer are in a non-contact state, and is in contact with the outer semiconductive layer; a rubber insulating layer surrounding the electric field alleviation layer and formed in a non-contact state with the second electrode; and a sleeve shielding layer surrounding the rubber insulating layer.

In addition, the sleeve shielding layer may be provided to be separated from the second electrode, and a distance between both ends of the sleeve shielding layer may be formed shorter than a distance between both ends of the rubber insulating layer so that a path for a creepage distance from the sleeve shielding layer to the second electrode is formed in a stepped shape.

Further, the distance between both ends of the rubber insulating layer may be formed shorter than a distance between both ends of the electric field alleviation layer, so that the path of the creepage distance from the sleeve shielding layer to the second electrode is formed in a stepped shape.

Here, the electric field alleviation layer may be configured from a material with higher electrical conductivity than the rubber insulating layer.

In this case, the conductor connection portion may include a conductor sleeve configured to connect the conductors of the pair of direct-current power cables, and a corona shield mounted on an outer side of the conductor sleeve and electrically connected to the conductor sleeve.

Further, the electric field alleviation layer may be provided to surround an entire region of an outer circumferential surface of the first electrode disposed in the center portion, and provided with an outer diameter variation section where an outer diameter of the electric field alleviation layer changes between the first electrode and the second electrode.

In addition, the electric field alleviation layer may include: a first electrode covering portion surrounding the first electrode; a pair of connection portions extending in a direction from both sides of the first electrode covering portion toward the second electrode, with a reduced outer diameter compared to the first electrode covering portion; a pair of inclined portions connected to the connection portions, with an increasing outer diameter in a direction of the second electrode to have an inclined section; and a pair of second electrode covering portions connected to the inclined portions, surrounding at least a portion of the second electrode, in which at least of a portion of the pair of second electrode covering portions may be disposed between the second electrode and the outer semiconductive layer so that the second electrode and the outer semiconductive layer are in a non-contact state, and in contact with the outer semiconductive layer.

Further, the second electrode covering portion may include a second electrode lower side cover portion disposed between the outer semiconductive layer and the second electrode, and a second electrode upper side cover portion surrounding at least a portion of an upper side of the second electrode.

Here, electrical conductivity of the rubber insulating layer may be $10^{-12}$ to $10^{-15}$ S/m (Siemens per meter), and electrical conductivity of the electric field alleviation layer may be 5 to 10,000 times greater than electrical conductivity of the rubber insulating layer.

In this case, a slope of the inclined portion of the electric field alleviation layer may be in the range of 5 degrees to 45 degrees.

Further, the electric field alleviation layer may be configured from an insulating composition including a thermosetting rubber and a filler that induces nonlinear electrical behavior.

In addition, the thermosetting rubber may be liquid silicone rubber (LSR) or ethylene propylene rubber (EPDM).

Further, the filler may include silicon carbide.

In addition, the housing may have a waterproofing material filled therein.

Meanwhile, the cable joint box may be a normal joint that electrically connects both ends of the sleeve shielding layer to the pair of second electrodes on both sides using electrical connection means.

In addition, the cable joint box may be an insulation joint that electrically connects one end of the sleeve shielding layer to only one of the second electrodes using electrical connection means, while the other end of the sleeve shielding layer and a remaining second electrode are in an insulated state.

Further, the housing may be made of a metal material.

**[Advantageous Effects]**

According to the direct-current power cable system of the present invention, the electric field alleviation layer configuring the sleeve member is provided between the second electrode and the outer semiconductive layer of the power cable. As a result, the contact area between the electric field alleviation layer and the second electrode increases, and the electric field alleviation layer is in direct contact with the outer semiconductive layer, further increasing the contact area. This expansion of the microcurrent path to the outer semiconductive layer of the power cable enables charges to be easily discharged to the outer semiconductive layer without space charge accumulation within the sleeve member. Furthermore, because a triple point where the insulating layer of the power cable, the second electrode of the sleeve member, and the electric field alleviation layer meet at a single point is not generated, there is an effect in that the excessive accumulation phenomenon of space charges within the sleeve member can be effectively prevented.

In addition, according to the direct-current power cable system of the present invention, the structure in which the electric field alleviation layer of the sleeve member surrounds the second electrode is applied. This prevents the formation of a triple point where the second electrode, rubber insulating layer, and electric field alleviation layer of the sleeve member meet at a single point, thereby exhibiting an effect of effectively preventing excessive accumulation phenomenon of space charges within the sleeve member.

In addition, according to the direct-current power cable system of the present invention, the electric field alleviation layer configuring the sleeve member is provided to surround the entire region of the first electrode and at least a portion of the pair of second electrodes. This configuration forms a microcurrent path within the electric field alleviation layer, allowing charges to move from the first electrode toward the pair of second electrodes, thereby exhibiting an effect of alleviating the electric field at the edge end region of the first electrode.

In addition, according to the direct-current power cable system of the present invention, configuring the thickness or outer diameter of each section of the electric field alleviation layer in the lengthwise direction of the sleeve member differently has an effect of preventing the phenomenon of dielectric strength reduction caused by the electric field alleviation layer becoming excessively large, while also minimizing costs.

Further, according to the direct-current power cable system of the present invention, the pair of second electrodes configuring the sleeve member are configured to be separated from the sleeve shielding layer to prevent contact. The path of the creepage distance from the sleeve shielding layer to the second electrode is formed in a stepped shape, with the distance between both ends of the sleeve shielding layer made shorter than the distance between both ends of the rubber insulating layer. This configuration secures the creepage distance between the sleeve shielding layer and the second electrode, thereby enabling diagnostic tasks, such as partial discharge signal diagnosis or fault diagnosis, of the direct-current power cable system.

**[Description of Drawings]**

FIG. 1 illustrates an embodiment of a power cable applied to a direct-current power cable system according to the present invention.
FIG. 2 illustrates an embodiment of a submarine cable applied to the direct-current power cable system according to the present invention.
FIG. 3 illustrates a cross-sectional view of the direct-current power cable system according to the present invention.
FIG. 4 illustrates a cross-sectional view of the direct-current power cable system when a cable joint box according to the present invention is used as a normal joint, and FIG. 5 illustrates a cross-sectional view of the direct-current power cable system when a cable joint box according to the present invention is used as an insulation joint.
FIG. 6 illustrates an enlarged cross-sectional view of a sleeve member mounted on a power cable in the direct-current power cable system according to the present invention.

FIG. 7 illustrates the movement direction of internal charges due to microcurrents within an electric field alleviation layer in the direct-current power cable system according to the present invention.

FIG. 8 illustrates a simulation graph of the electric field distribution around the electric field alleviation layer configuring the direct-current power cable system according to the present invention.

FIG. 9 illustrates an example of a direct-current power cable system according to conventional technology.

**[Mode for Disclosure]**

Hereinafter, exemplary embodiments of the present invention will be described in detail with reference to the accompanying drawings. However, the present invention is not limited to the exemplary embodiments to be described below and may be specified as other aspects. On the contrary, the embodiments introduced herein are provided to make the disclosed content thorough and complete, and sufficiently transfer the spirit of the present invention to those skilled in the art. Like reference numerals indicate like constituent elements throughout the specification.

In this specification, the term "surround" refers to surrounding in a radial direction, not in a lengthwise direction of a cable or sleeve member. That is, when A is said to surround B, it refers to that A surrounds B in the radial direction of the cable or sleeve member.

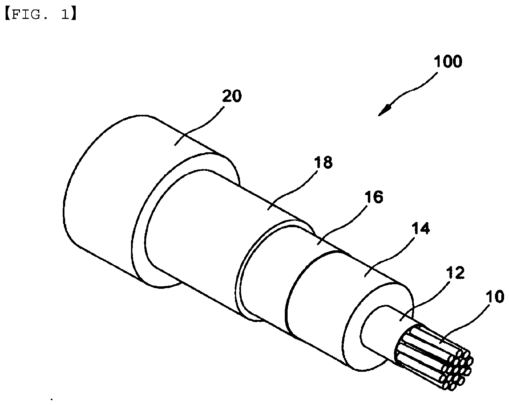

FIG. 1 illustrates an embodiment of an underground power cable applied to a direct-current power cable system according to the present invention.

As illustrated in FIG. 1, a power cable 100 is provided with a conductor 10 at a center thereof. The conductor 10 serves as a passage for current flow and may, for example, be configured from materials such as copper or aluminum. The conductor 10 illustrated in FIG. 1 is illustrated as being configured by stranding multiple wires 11, but is not limited thereto, the conductor may also be configured in various forms, such as a flat conductor.

Further, the conductor 10 configured by stranding wires or similar elements may have an uneven surface, leading to an uneven electric field and making partial corona discharge more likely. In addition, the insulation performance may be degraded when voids are formed between the surface of the conductor 10 and an insulation layer 14 described below. To solve problems as described above, an inner semiconductive layer 12 configured from a semiconductive material may be provided on an outer side of the conductor 10.

The insulating layer 14 is provided on an outer side of the inner semiconductive layer 12. The insulating layer 14 electrically insulates the conductor 10 from the outside.

In general, the insulating layer 14 needs to have a high breakdown voltage and maintain stable insulation performance over an extended period. Further, the insulating layer 14 exhibit low dielectric loss and possess thermal resistance performance, such as heat resistance. Accordingly, the insulating layer 14 uses polyolefin resins such as polyethylene and polypropylene, with polyethylene resin being preferred. The polyethylene resin may be a crosslinked resin and may be manufactured using a crosslinking agent such as silane or an organic peroxide, for example, dicumyl peroxide (DCP), etc.

However, when a direct-current high voltage is applied to the power cable, charges may be injected from the conductor 10 into the inner semiconductive layer 12, insulating layer 14, and the like, potentially leading to the formation of space charges within the insulating layer 14. The formed space charges accumulate within the insulating layer 13 over the usage time of the cable. When impulse voltage is applied to the cable or the polarity of the direct-current voltage applied to the cable reverses abruptly, these accumulated space charges may sharply increase the electric field strength near the conductor 10, causing a problem of reducing the insulation breakdown voltage of the power cable.

Accordingly, the insulating layer 14 may include inorganic particles in addition to the crosslinked resin. The inorganic particles may include nano-sized aluminosilicate, calcium silicate, calcium carbonate, magnesium oxide, and similar materials. However, from the perspective of impulse strength of the insulating layer, magnesium oxide is the preferred inorganic particle. The magnesium oxide may be obtained from natural magnesium ores, but it may also be produced from artificial synthetic sources using magnesium salts in seawater, with the additional advantage of being supplied as a high-purity material with stable quality and properties.

The magnesium oxide basically has the crystal structure of a face-centered cubic structure, but may have various shapes, purities, degrees of crystallinity, and physical properties depending on the synthesis method. Specifically, the magnesium oxide is classified into cubic, terrace, rod, porous, and spherical types and may be used in various applications according to each unique physical property. The inorganic particles, including such magnesium oxide, exert an effect of suppressing the movement of charges and the accumulation of space charges by forming a potential well at the interface between the base resin and the inorganic particles when an electric field is applied to the cable.

However, the inorganic particles added to the insulating layer 14 may act as impurities when added in large amounts, and even in small amounts, the inorganic particles present the problem of reducing impulse strength, which is another critical property required in power cables. Therefore, it is preferable to add the inorganic particles in an amount of 0.2 to 5 parts by weight, as inorganic particles alone cannot sufficiently reduce accumulated space charges.

Meanwhile, if the exterior as well as the interior of the insulating layer 14 is not shielded, some portion of the electric field is absorbed by the insulating layer 14, but a large portion of the electric field discharges externally. In this case, when the electric field becomes a predetermined value or higher, the insulating layer 14 and the cable jacket of the power cable 100 may be damaged. Accordingly, the outer semiconductive layer 16 is provided on an outer side of the insulating layer 14. As a result, the outer semiconductive layer 16 serves to create an equipotential distribution of electric field lines between the aforementioned inner semiconductive layer 12, thereby enhancing the dielectric strength of the insulating layer 14. In addition, the outer semiconductive layer 16 smooths the surface of the insulating layer 14 in the cable, alleviating electric field concentration and thereby preventing corona discharge.

On the outer side of the outer semiconductive layer 16, a shielding layer 18, consisting of either a metal sheath or a neutral wire depending on the type of cable, is provided. The shielding layer 18 is provided for electrical shielding and as a return path for short-circuit currents.

A cable jacket 20 is provided on an outermost portion of the power cable 100. The cable jacket 20 is provided on an outer circumference of the cable 100 and serves to protect the internal configuration of the cable 100. Accordingly, the cable jacket 20 is endowed with excellent weather resistance to endure various climatic and natural environmental factors, such as light, wind, rain, moisture, and atmospheric gases, as well as chemical resistance to withstand exposure to chemicals, along with high mechanical strength. Generally, the cable jacket is manufactured with materials such as polyvinyl chloride (PVC) or polyethylene (PE).

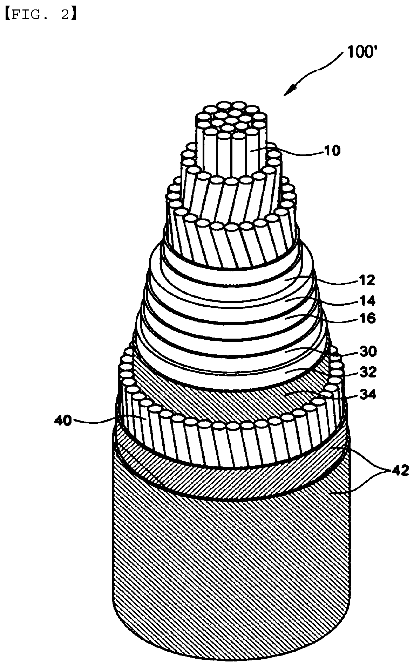

FIG. 2 illustrates an embodiment of a submarine cable 100' applied to the direct-current power cable system according to the present invention. The differences will be described in comparison to the previously described embodiment in FIG. 1.

With reference to FIG. 2, the conductor 10, the inner semiconductive layer 12, the insulating layer 14, and the outer semiconductive layer 16 are similar to the embodiment described in FIG. 1, and therefore, repetitive descriptions are omitted.

On the exterior of the outer semiconductive layer 16, a metal sheath 30 made of lead, commonly known as a "lead sheath," is provided to prevent the intrusion of foreign substances, such as external water, which may otherwise degrade the performance of the insulating layer 14.

Further, on the exterior of the metal sheath 30, a sheath 32 configured from a resin such as polyethylene is provided with a bedding layer 34 to prevent direct contact with water. Sheathing wires 40 may be provided on the bedding layer 34. The sheathing wires 40 are provided on the outer circumference of the cable to serve to enhance mechanical strength in order to protect the cable from the external environment of the seabed.

On the outer circumference of the sheathing wires 40, that is, on the outer circumference of the cable, a serving layer 42 is provided as the outer covering of the cable. The serving layer 42 is provided on the outer circumference of the cable and serves to protect the internal configuration of the cable. Particularly for submarine cables, the serving layer 42 possesses excellent weather resistance and mechanical strength to withstand submarine environments, such as exposure to seawater. For example, the serving layer 42 may be configured from materials such as polypropylene yarn.

Each direct-current power cable described with reference to FIGS. 1 and 2 has a matching core structure, aside from the cable protective layer structure according to the installation environment. Accordingly, hereinafter, a description will be provided for a direct-current power cable system connected via a cable joint box.

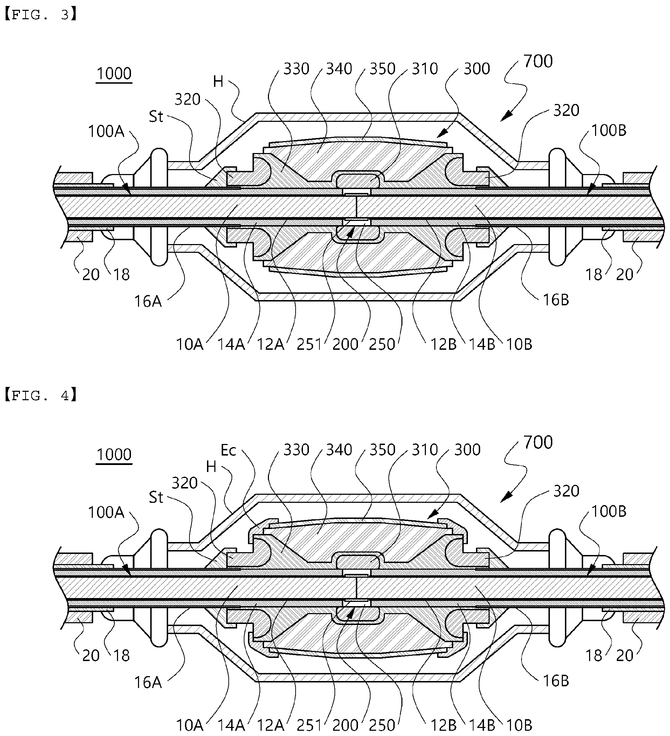

FIG. 3 illustrates a cross-sectional view of the direct-current power cable system according to the present invention. For convenience of description, a description will be provided for a direct-current power cable system configured with the direct-current power cable for underground installation being connected, illustrated in FIG. 1.

A direct-current power cable system 1000 according to the present invention may be configured to include a pair of direct-current power cables 100A and 100B and a cable joint box 700 that connects the pair of direct-current power cables 100A and 100B.

Further, as illustrated in FIG. 3, the cable joint box 700 may be configured to include a conductor connection portion 200 that connects the conductors of the pair of direct-current power cables; a sleeve member 300 mounted to surround the conductor connection portion 200 and cable connection regions; and a housing H that accommodates the sleeve member 300 therein. The housing may be configured with a metal casing of a metal material. In this case, a space between the housing H of the cable joint box and the sleeve member 300 according to the present invention may be filled with a waterproofing material (not illustrated) or similar substance.

The conductor connection portion 200 inside the cable joint box 700 connects the conductors 10A and 10B of the pair of direct-current power cables 100A and 100B by welding the ends of the conductors, or by applying a conductor sleeve 251, which may be pressed or connected to the conductor using fastening bolts. A corona shield 250 may be mounted on a conductor-connected portion, and the corona shield 250 is mounted to be horizontally level with the insulators of the pair of direct-current power cables 100A and 100B, and is electrically connected to the conductor sleeve 251 or the connected conductors 10A and 10B using braided wires or similar means.

The corona shield 250 may be mounted using a fixing structure (not illustrated), such as a groove mounted on the insulator, to ensure that no level difference occurs with the insulating layers 14A and 14B of the pair of direct-current power cables 100A and 100B.

Further, the sleeve member 300 may be mounted to surround the insulating layers 14A and 14B of the pair of direct-current power cables 100A and 100B and the corona shield 250.

That is, the sleeve member 300 may be configured to include: a first electrode 310 disposed to surround the conductor connection portion and electrically connected to the conductor connection portion 200; a pair of second electrodes 320 provided each on both sides of the first electrode 310 along a cable length direction; an electric field alleviation layer 330 that surrounds the first electrode 310, at least a portion of the pair of second electrodes 320, and the insulating layer 16, and at least a portion thereof is disposed between the outer semiconductive layer 16 and the second electrodes 320 so that the second electrodes and the outer semiconductive layer are in a non-contact state, while being in contact with the outer semiconductive layer 16; a rubber insulating layer 340 that surrounds the electric field alleviation layer 330 and formed to remain in a non-contact state with the second electrodes 320; and a sleeve shielding layer 350 that surrounds the rubber insulating layer 340.

The first electrode 310 and the pair of second electrodes 320 may be manufactured using a semiconductive material, such as semiconductive liquid silicone rubber (LSR) or semiconductive ethylene propylene rubber (EPDM). The first electrode 310 and the pair of second electrodes 320 serves to ensure that the electric field is evenly distributed without local concentration between the first electrode 310 and the pair of second electrodes 320.

Specifically, the first electrode 310 is electrically connected to the conductors 10A and 10B of the pair of direct-current power cables, serving as a so-called high-voltage electrode (high voltage semi-conductor). The pair of second electrodes 320 are each electrically connected to the outer semiconductive layers of the pair of direct-current power cables 100A and 100B through a semiconductive taping layer (St), described below, or similar, performing the role of a so-called deflector electrode (deflector semi-conductor). Accordingly, within the sleeve member, the electric field distribution is arranged along the area between the first electrode 310 and the second electrode 320.

As illustrated in FIG. 3, The shape of the first electrode 310 may be formed of a curved surface with rounded edges, and the shape of the second electrode 320 may have an inner surface formed of rounded curved surface that is in close contact with the electric field alleviation layer 330 of the sleeve member. Additionally, the shape, size, and material of the first electrode 310 and second electrode 320 may be appropriately adjusted to be designed to ensure that the electric field distribution between the first electrode 310 and the second electrode 320 does not become concentrated.

The direct-current power cable system according to the present invention may be configured such that the pair of second electrodes 320 are separated from the sleeve shielding layer 350, which is disposed at an outermost portion of the sleeve member 300, to prevent contact with the sleeve shielding layer 350, and may be provided on both sides of the sleeve member 300.

Here, the sleeve shielding layer 350 is configured from a semiconductive material, similar to the first electrode 310 or the second electrode 320. As described above, the sleeve shielding layer 350 in the sleeve member 300 is provided spaced apart from the second electrode 320, which serves as a shielding electrode. However, optionally, the sleeve shielding layer 350 and the second electrode 320 may be formed to be electrically connected using electrical connection means, in which a semiconductive taping layer, a metal mesh, or similar means may be used as the electrical connection means.

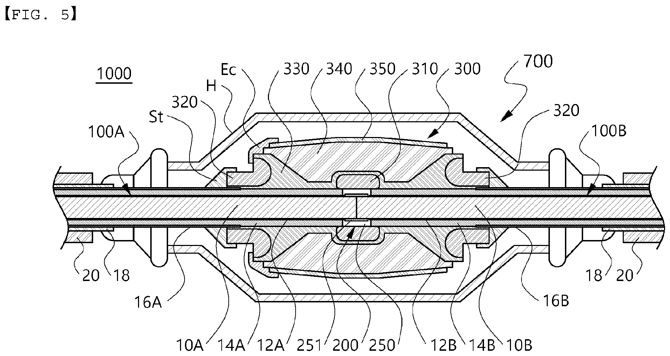

FIG. 4 illustrates a cross-sectional view of the direct-current power cable system when a cable joint box according to the present invention is used as a normal joint, and FIG. 5 illustrates a cross-sectional view of the direct-current power cable system when a cable joint box according to the present invention is used as an insulation joint.

As illustrated in FIG. 4, when the cable joint box according to the present invention is used as a normal joint, the cable joint box may be used so that both ends of the sleeve shielding layer 350 is electrically connected to the pair of second electrodes 320 on both sides using electrical connection means (Ec). Meanwhile, as illustrated in FIG. 5, when the cable joint box is used as an insulation joint, the cable joint box may be used so that only one end of the sleeve shielding layer 350 is electrically connected to one of the second electrodes 320 using the electrical connection means (Ec), while the other end of the sleeve shielding layer 350 and the remaining second electrode 320 are kept in an insulated state.

In addition, as illustrated in FIG. 5, when the cable joint box is used as an insulation joint, an insulating barrel (not illustrated) may be provided in the middle of the housing H of a metal material, thereby an electrically insulated section being provided within the housing.

Meanwhile, to maintain separation between the sleeve shielding layer 350 and the second electrode 320 in the sleeve member 300, a distance between both ends of the sleeve shielding layer 350 may be formed shorter than a distance between both ends of the rubber insulating layer 340 so that a path of a creepage distance from the sleeve shielding layer 350 to the second electrode 320 is formed in a stepped shape. Furthermore, a distance between both ends of the rubber insulating layer 340 may be formed shorter than a distance between both ends of the electric field alleviation layer so that the path of the creepage distance from the sleeve shielding layer 350 to the second electrode 320 is formed in a stepped shape. The detailed description thereof will be described below.

Further, in a direct-current power cable system configured with multiple cable joint boxes being connected, the cable joint box configuring the direct-current power cable system illustrated in FIGS. 3 to 5, diagnostic techniques such as partial discharge diagnosis or fault diagnosis are widely utilized.

When utilizing such diagnostic techniques, the area between the sleeve shielding layer 350 and the second electrode 320 in the sleeve member 300 in the insulation joint needs to be insulated and have sufficient creepage distance to allow for sectional diagnosis of the cable system.

Additionally, for fault diagnosis, the diagnostic device applies a test voltage to the shielding layer of the power cable system to diagnose fault signals. Measurement is only possible when the second electrode 320 and the sleeve shielding layer 350 in the sleeve member 300 within the insulation joint are separated, and a creepage distance exists. If the creepage distance between the sleeve shielding layer 350 and the second electrode 320 in the sleeve member 300 is not secured, sufficient voltage is not applied even when a test voltage is applied, making diagnosis impossible.

Therefore, the present invention enables smooth diagnostic operations for the power cable system by configuring the second electrode 320 and the sleeve shielding layer 350 that configure the sleeve member to be separated, allowing sectional diagnosis of the cable system.

The rubber insulating layer 340 is manufactured from, for example, liquid silicone rubber (LSR) or ethylene propylene rubber (EPDM), thereby ensuring the insulating performance of the sleeve member 300.

The electric field alleviation layer 330 is provided between the cable insulating layer 14 and the rubber insulating layer 340 to surround the first electrode 310 and at least a portion of the pair of second electrodes 320. The electric field alleviation layer 330 primarily performs an insulating function, but because the electric field alleviation layer 330 is configured with an insulating composition of higher electrical conductivity than the rubber insulating layer 340, when an excessive electric field is applied and microcurrents flow through the electric field alleviation layer 330, charges move in the direction of the electric field alleviation layer 330. This allows the charges to be discharged outside the sleeve member 300 through the second electrode 320 and the outer semiconductive layer 16 of the cable.

Examining the structure of a cable joint box without a conventional electric field alleviation layer, when a predetermined direct-current (DC) voltage is applied to the cables 100A and 100B for a predetermined period of time or more, space charges may accumulate locally inside the cable joint box, for example, at the interface between the insulating layers 14A and 14B of the cables 100A and 100B and the rubber insulating layer 340, which have different materials, i.e., at the heterogeneous interface. This accumulation of space charges may act as a weak point in terms of insulation performance. Accordingly, it is necessary to discharge the accumulated space charges as described above.

Accordingly, the sleeve member 300 according to the present invention is provided with the aforementioned electric field alleviation layer 330 to enable the discharge of space charges as described above. The electric field alleviation layer 330 allows microcurrents to flow selectively according to a specific electric field value, between the conductors 10A and 10B and the outer semiconductive layers 16A and 16B of the ultra-high voltage direct-current power cable. When the space charges accumulate at a certain level or higher, this electric field alleviation layer 330 discharges the charges.

The electric field alleviation layer 330 may have a volume resistivity that changes non-linearly under an electric field in the range of $10^{10}$ to $2\times10^{17}$ $\Omega\cdot$cm. For the electric field alleviation layer 330 with a volume resistivity within the range above, the rubber insulating layer 340 may have a higher volume resistivity of $10^{14}$ to $10^{18}$ $\Omega\cdot$cm.

In the electric field alleviation layer 330, the meaning of the electric field alleviation layer 330 allowing microcurrents to selectively flow between the conductor 10 and the outer semiconductive layer 16 is as follows. The electric field alleviation layer 330, with the aforementioned physical properties, normally has a relatively high resistance and thus does not electrically connect the conductor 10 and the outer semiconductive layer 16.

In contrast, when space charges accumulate within the sleeve member 300, particularly when space charges accumulate at a predetermined level or higher at heterogeneous interfaces, such as the interface between the cable insulating layer 14 and the electric field alleviation layer 330, the interface between the electric field alleviation layer 330 and the rubber insulating layer 340, or at the edge portion of the first electrode 310, the electric field alleviation layer serves to discharge these charges. For example, the electric field alleviation layer 330 may have an electrical characteristic where its resistance decreases non-linearly when an electric field of a predetermined level of higher is applied. Accordingly, when space charges accumulate and an electric field of a predetermined level of higher is applied, the resistance of the electric field alleviation layer 330 decreases non-linearly, allowing charges to be discharged from the first electrode 310 to the second electrode 320 or the outer semiconductive layer 16. Accordingly, the electric field alleviation layer 330 may be manufactured from a material known as field grading material (FGM). As a result, the electric field alleviation layer 330 serves as a discharge passage for discharging charges.

Further, as illustrated in FIG. 3, the second electrode 320 and the outer semiconductive layer 16 of the power cable are not in direct contact. However, by finishing with a semiconductive taping layer (St) configured by cross-winding a separate semiconductive tape before mounting the housing H, the second electrode 320 and the outer semiconductive layer 16 of the power cable may be electrically connected.

Further, the housing H may also be finished to be mounted and grounded so that the housing H is connected to the metal shielding layer 18 of the power cable.

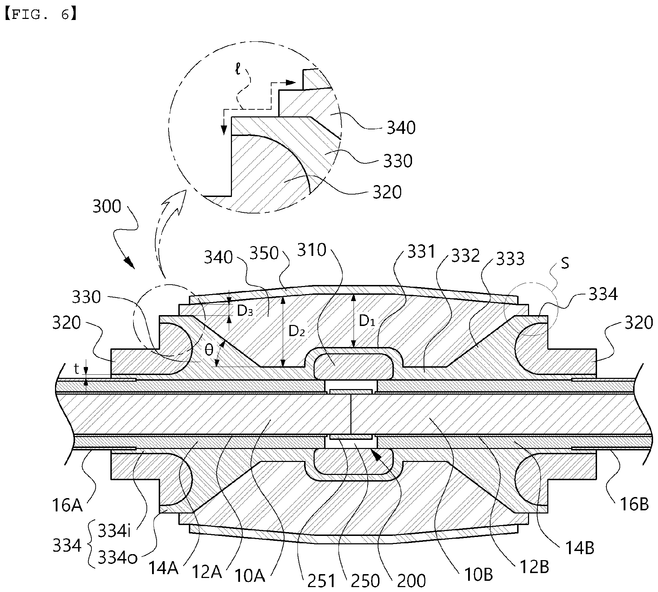

The direct-current power cable system according to the present invention may prevent or minimize electric field distortion and the reduction of direct-current dielectric strength due to space charge accumulation in the sleeve member 300 by adjusting the shape of the electric field alleviation layer 330 and controlling the component content of the insulating composition that regulates the electrical conductivity of the electric field alleviation layer 330. Hereinafter, a detailed description will be provided with reference to FIG. 6.

FIG. 6 illustrates an enlarged cross-sectional view of the sleeve member 300 in the direct-current power cable system according to the present invention.

As illustrated in FIG. 6, the electric field alleviation layer 330 and the rubber insulating layer 340 each have a stepped level difference S formed at both ends, and the stepped level difference S may be provided to be exposed outside both ends of the sleeve shielding layer 350.

That is, a distance between both ends of the sleeve shielding layer 350 may be formed shorter than a distance between both ends of the rubber insulating layer 340, and the distance between both ends of the rubber insulating layer 340 may be formed shorter than a distance between both ends of the electric field alleviation layer.

With this structure, the distance between both ends of the electric field alleviation layer 330, along the cross-section may be configured longer than that of the rubber insulating layer 340. This arrangement allows the sleeve shielding layer 350, the rubber insulating layer 340, and the electric field alleviation layer 330 to sequentially form the stepped level difference S, enabling the path of the creepage distance from the sleeve shielding layer to the second electrode to be formed as a stepped shape.

As described above, the sleeve shielding layer 350 is spaced apart from the second electrode 320 to ensure a creepage distance $\ell$ along the stepped path, which is a surface distance from each end of the sleeve shielding layer 350 to each second electrode 320, allowing for smooth diagnostic operations of the direct-current power cable system.

Meanwhile, the electric field alleviation layer 330 has relatively low resistance and dielectric strength properties, so caution should be taken to avoid excessive use. Accordingly, in the present invention, by configuring the thickness or outer diameter of each section of the electric field alleviation layer 330 differently in the length direction, it is possible to prevent dielectric strength reduction caused by an excessive proportion of the electric field alleviation layer 330, while also minimizing costs associated with reducing the amount of electric field alleviation layer 330 used.

With reference to FIG. 6, the electric field alleviation layer 330 is provided to surround the first electrode 310 and at least a portion of the second electrodes 320 disposed at the center portion. The electric field alleviation layer 330 is provided with an outer diameter variation section, where an outer diameter of the electric field alleviation layer 330 changes in the direction from the first electrode 310 toward the pair of second electrodes 320 disposed on both sides. Accordingly, compared to configuring an outer circumferential surface of the electric field alleviation layer 330 as flat, it is expected to reduce consumption of a material that configures the electric field alleviation layer 330 while still providing sufficient electric field alleviation effects due to charge movement.

Here, a slope $\theta$ of an inclined section of the electric field alleviation layer 330 in the sleeve member 300 may be formed within a range of 5 to 45 degrees, preferably within 15 to 25 degrees.

Specifically, the electric field alleviation layer 330 may be configured to include: a first electrode covering portion 331 that surrounds the first electrode 310; a pair of connection portions 332 with a reduced outer diameter compared to the first electrode covering portion 331, extending from both sides of the first electrode covering portion 331 in the direction of the second electrodes; a pair of inclined portions 333 connected to the connection portions 332, with an increasing outer diameter in the direction of the second electrodes to have an inclined section; and a pair of second electrode covering portions 334 connected to the inclined portions 333, surrounding at least a portion of the second electrodes 320 and having at least a portion disposed between the outer semiconductive layer 16 and the second electrodes 320 so that the second electrodes 320 and the outer semiconductive layer 16 are in a non-contact state, while the at least a portion being in contact with the outer semiconductive layer 16.

When the electric field alleviation layer 330 is configured in this manner, the rubber insulating layer 340 may be provided on the interface of the electric field alleviation layer 330 while satisfying the following Equation 1.

[Equation 1]

$$D2\,(mm) \;\geq\; D1\,(mm) \;\geq\; D3\,(mm)$$

Here,

D1: Thickness (mm) between top of the first electrode covering portion 331 and an outer circumferential surface of the rubber insulating layer 340, based on the cross-section of the sleeve member 300.

D2: Thickness (mm) between top of the connection portion 332 and an outer circumferential surface of the rubber insulating layer 340, based on the cross-section of the sleeve member 300.

D3: Thickness (mm) between top of second electrode covering portion 334 and an outer circumferential surface of the rubber insulating layer 340, based on the cross-section of the sleeve member 300.

In addition, an interface length of the inclined section of the inclined portion 333 may be configured to be longer than an interface length of the connection portion 332 of the electric field alleviation layer 330 (allowing the slope θ of the inclined section to be gently configured). In such a configuration, the electric field alleviation layer 330 may more stably withstand the high pressure applied to the electric field alleviation layer 330 during the manufacturing process of forming the rubber insulating layer 340 on the interface of the electric field alleviation layer 330.

Furthermore, the electric field alleviation layer 330 of the sleeve member 300 surrounds the first electrode 310, at least a portion of the second electrode 320, and the insulating layer, and is in close contact with an inner surface of the pair of second electrodes 320. At least a portion of electric field alleviation layer 330 is provided to be disposed between the second electrode and the outer semiconductive layer so that the second electrode and the outer semiconductive layer are in a non-contact state, and in contact with the outer semiconductive layer. Accordingly, the outer semiconductive layer of the pair of direct-current power cables 100A and 100B and the pair of second electrodes 320 may be mutually spaced apart by the electric field alleviation layer 330. Here, a spacing distance t between the second electrode 320 and each outer semiconductive layer 16 may preferably be formed within a range of 2 millimeters (mm) to 10 millimeters (mm).

Further, the second electrode covering portion 343 is configured to include a second electrode lower side cover portion 334i disposed between the outer semiconductive layer 16 and the second electrode 320, and a second electrode upper side cover portion 334o surrounding at least a portion of an upper side of the second electrode 320. With this configuration, the second electrode 320 is semi-embedded within the electric field alleviation layer 330, thereby allowing the second electrode 320 to remain non-contact with the insulating layer 14 and outer semiconductive layer 16 of the power cable, as well as the rubber insulating layer 340 of the sleeve member.

If the second electrode lower side cover portion 334i, which configures the second electrode covering portion 343 of the electric field alleviation layer 330, is omitted, a triple point where the second electrode 320, the outer semiconductive layer 16, and the electric field alleviation layer 330 all come into contact is generated. In this triple point, space charges may excessively accumulate, resulting in an electrically vulnerable portion.

Therefore, the power cable system according to the present invention extends the electric field alleviation layer 330 into a space between the second electrode 320 and the outer semiconductive layer 16 by a way of configuring elements such as the second electrode lower side cover portion 334i, which configures the second electrode covering portion 343. With this configuration, the second electrode 320 and the outer semiconductive layer 16 are configured to be spaced apart, thereby preventing the occurrence of the triple point that is generated through the second electrode 320, the outer semiconductive layer 16, and the electric field alleviation layer 330 all coming into contact.

In addition, as a contact area between the electric field alleviation layer 330 and the second electrode 320 increases, and the electric field alleviation layer 330 is in direct contact with the outer semiconductive layer 16, the contact area further increases. This configuration may expand the microcurrent path to the outer semiconductive layer 16, allowing space charges to discharge easily into the outer semiconductive layer without accumulating.

Furthermore, the electric field alleviation layer 330 may be composed of an insulating composition with higher electrical conductivity than the rubber insulating layer 340. It has been experimentally confirmed that, due to this electrical conductivity, the temperature of the electric field alleviation layer 330 may be controlled within a range of 20 to 90 degrees Celsius (°C) when an electric field of 10 to 30 kV/mm is applied to the electric field alleviation layer 330.

Here, the electrical conductivity of the rubber insulating layer 340 is $10^{-12}$ to $10^{-15}$ S/m (siemens per meter), and it is preferable that the electrical conductivity of the electric field alleviation layer 330 is greater than that of the rubber insulating layer 340. Preferably, the electrical conductivity of the electric field alleviation layer 330 may be adjusted to be in the range of 5 to 10,000 times that of the rubber insulating layer 140. For example, under the condition that temperature and electric field remain constant, when the electrical conductivity of the rubber insulating layer 340 is $10^{-14}$ S/m, the electrical conductivity of the electric field alleviation layer 330 may be adjusted to $5\times10^{-14}$ to $10^{-10}$ S/m by the insulating composition.

The electric field alleviation layer 330 may be configured from an insulating composition that includes thermosetting rubber and a filler that induces nonlinear electrical behavior. The thermosetting rubber may be configured as liquid silicone rubber (LSR), ethylene propylene rubber (EPDM), or a mixture thereof, and lubricants, crosslinking agents, co-crosslinking agents, and antioxidants, etc. may in added into the mixture.

Further, fillers that induce nonlinear electrical behavior, such as silicon carbide, may be used. In addition, conductive or semiconductive fillers may be further used to enhance properties.

Here, through adjusting the content of components of the filler, the electrical properties of the electric field alleviation layer 330, that is, the insulating function, may be achieved, while satisfying the characteristic that when microcurrents cause a specific electric field value or more, the electrical conductivity significantly increases, allowing the charge to move along the electric field relaxation layer.

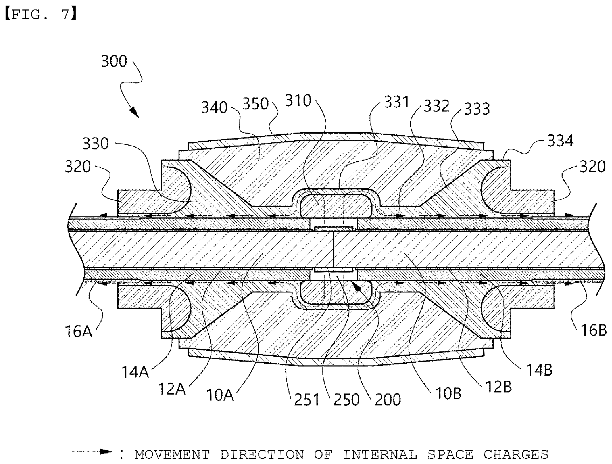

FIG. 7 illustrates the movement direction of internal charges due to microcurrents within an electric field alleviation layer in the direct-current power cable system according to the present invention.

As illustrated in FIG. 7, when an excessive voltage is applied to the interior of the sleeve member 300 having the aforementioned configuration, microcurrents flow into the electric field alleviation layer 330, and the microcurrents flow along the electric field alleviation layer 330, which has a thin thickness in the spaced region between the second electrode 320 and the outer conductive layer 16. Further, since the end of the electric field alleviation layer 330 is connected to the outer semiconductive layer 16, the charges inside the sleeve member 300 are discharged to the outer semiconductive layer 16 through the electric field alleviation layer 330, which has a thin thickness, by the microcurrent, thereby preventing or minimizing electric field distortion due to local electric field concentration and insulation breakdown of the cable joint box.

FIG. 8 illustrates a simulation graph of the electric field distribution around the electric field alleviation layer 330 configuring the direct-current power cable system according to the present invention.

In the electric field distribution graph of the direct-current power cable system according to the present invention, as illustrated in FIG. 8, it is indicated that the closer the color is to blue (or a dark color), the more alleviated the electric field distribution is, and the closer the color is to red (or a bright color), the more concentrated the electric field is.

With reference to FIG. 8, it has been confirmed that, in the sleeve member 300 of the direct-current power cable system according to the present invention, the electric field distribution is uniformly spread between the first electrode 310 and the second electrode 320, and while the electric field is partially concentrated in the region where the thickness of the rubber insulating layer 340 decreases, it exhibits good performance in terms of electric field alleviation.

That is, through the results of FIG. 8, it can be seen that the direct-current power cable system according to the present invention optimizes the size of the electric field alleviation layer surrounding the first electrode and the second electrode as described above in terms of the shape of the electric field alleviation layer, thereby providing sufficient electric field alleviation performance while preventing the volume of the electric field alleviation layer from becoming excessively large, which may result in cost reduction.

While the present invention has been described above with reference to the exemplary embodiments, it may be understood by those skilled in the art that the present invention may be variously modified and changed without departing from the spirit and scope of the present invention disclosed in the claims. Therefore, it should be understood that any modified embodiment that essentially includes the constituent elements of the claims of the present invention is included in the technical scope of the present invention.

## Claims

1. A direct-current power cable system, comprising:

> a pair of direct-current power cables, each including a conductor, an inner semiconductive layer surrounding the conductor, an insulating layer surrounding the inner semiconductive layer, and an outer semiconductive layer surrounding the insulating layer, wherein cable connection regions in which the conductor, the insulating layer, and the outer semiconductive layer are sequentially exposed are disposed to face each other;
> a cable joint box connecting the pair of direct-current power cables, the cable joint box including: a conductor connection portion configured to connect the conductors of the pair of direct-current power cables; a sleeve member mounted to surround the conductor connection portion and the cable connection regions; and a housing accommodating the sleeve member, wherein the sleeve member includes:
>
>> a first electrode disposed to surround the conductor connection portion and electrically connected to the conductor connection portion;
>> a pair of second electrodes each provided on both sides of the first electrode along a cable length direction;
>> an electric field alleviation layer surrounding the first electrode, at least a portion of the pair of second electrodes, and the insulating layer, and
>> wherein at least a portion of the electric field alleviation layer is disposed between the second electrode and the outer semiconductive layer so that the second electrode and the outer semiconductive layer are in a non-contact state, and is in contact with the outer semiconductive layer;
>> a rubber insulating layer surrounding the electric field alleviation layer and formed in a non-contact state with the second electrode; and
a sleeve shielding layer surrounding the rubber insulating layer.

2. The direct-current power cable system of claim 1, wherein the sleeve shielding layer is provided to be separated from the second electrode, and
wherein a distance between both ends of the sleeve shielding layer is formed shorter than a distance between both ends of the rubber insulating layer, so that a path for a creepage distance from the sleeve shielding layer to the second electrode is formed in a stepped shape.

3. The direct-current power cable system of claim 2, wherein the distance between both ends of the rubber insulating layer is formed shorter than a distance between both ends of the electric field alleviation layer, so that the path of the creepage distance from the sleeve shielding layer to the second electrode is formed in a stepped shape.

4. The direct-current power cable system of claim 1, wherein the electric field alleviation layer is configured from a material with higher electrical conductivity than the rubber insulating layer.

5. The direct-current power cable system of claim 1, wherein the conductor connection portion includes:

a conductor sleeve configured to connect the conductors of the pair of direct-current power cables; and
a corona shield mounted on an outer side of the conductor sleeve and electrically connected to the conductor sleeve.

6. The direct-current power cable system of claim 1, wherein the electric field alleviation layer is provided to surround an entire region of an outer circumferential surface of the first electrode disposed in the center portion, and is provided with an outer diameter variation section where an outer diameter of the electric field alleviation layer changes between the first electrode and the second electrode.

7. The direct-current power cable system of claim 6, wherein the electric field alleviation layer includes:

a first electrode covering portion surrounding the first electrode;
a pair of connection portions extending in a direction from both sides of the first electrode covering portion toward the second electrode, with a reduced outer diameter compared to the first electrode covering portion;
a pair of inclined portions connected to the connection portions, with an increasing outer diameter in a direction of the second electrode to have an inclined section; and
a pair of second electrode covering portions connected to the inclined portions, surrounding at least a portion of the second electrode, wherein at least of a portion of the pair of second electrode covering portions is disposed between the second electrode and the outer semiconductive layer so that the second electrode and the outer semiconductive layer are in a noncontact state, and in contact with the outer semiconductive layer.

8. The direct-current power cable system of claim 7, wherein the second electrode covering portion includes:

a second electrode lower side cover portion disposed between the outer semiconductive layer and the second electrode; and
a second electrode upper side cover portion surrounding at least a portion of an upper side of the second electrode.

9. The direct-current power cable system of claim 7, wherein a slope of the inclined portion of the electric field alleviation layer is in the range of 5 degrees to 45 degrees.

10. The direct-current power cable system of claim 1, wherein electrical conductivity of the rubber insulating layer is $10^{-12}$ to $10^{-15}$ S/m (Siemens per meter), and electrical conductivity of the electric field alleviation layer is 5 to 10,000 times greater than electrical conductivity of the rubber insulating layer.

11. The direct-current power cable system of claim 10, wherein the electric field alleviation layer is configured from an insulating composition including a thermosetting rubber and a filler that induces nonlinear electrical behavior.

12. The direct-current power cable system of claim 11, wherein the thermosetting rubber is liquid silicone rubber (LSR) or ethylene propylene rubber (EPDM).

13. The direct-current power cable system of claim 11, wherein the filler includes silicon carbide.

14. The direct-current power cable system of claim 1, wherein the housing has a waterproofing material filled therein.

15. The direct-current power cable system of claim 1, wherein the cable joint box is a normal joint that electrically connects both ends of the sleeve shielding layer to the pair of second electrodes on both sides using electrical connection means.

**16.** The direct-current power cable system of claim 1, wherein the cable joint box is an insulation joint that electrically connects one end of the sleeve shielding layer to only one of the second electrodes using electrical connection means, while the other end of the sleeve shielding layer and a remaining second electrode are in an insulated state.

**17.** The direct-current power cable system of claim 1, wherein the housing is made of a metal material.

【FIG. 1】

【FIG. 2】

【FIG. 3】

【FIG. 4】

【FIG. 5】

【FIG. 6】

【FIG. 7】

----► : MOVEMENT DIRECTION OF INTERNAL SPACE CHARGES

【FIG. 8】

【FIG. 9】

| | |
|---|---|
| **INTERNATIONAL SEARCH REPORT** | International application No.<br>**PCT/KR2023/008590** |

**A.    CLASSIFICATION OF SUBJECT MATTER**

**H02G 15/184**(2006.01)i; **H01B 9/02**(2006.01)i

According to International Patent Classification (IPC) or to both national classification and IPC

**B.    FIELDS SEARCHED**

Minimum documentation searched (classification system followed by classification symbols)

H02G 15/184(2006.01); H01B 1/02(2006.01); H01B 17/56(2006.01); H01R 31/06(2006.01); H02G 1/14(2006.01);
H02G 15/068(2006.01); H02G 15/08(2006.01); H02G 15/105(2006.01); H02G 15/115(2006.01); H02G 15/18(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전력 케이블(power cable), 슬리브(sleeve), 접속함(junction box), 전극
(electrode), 전계 완화(electric field relaxing), 절연층(insulating layer)

**C.    DOCUMENTS CONSIDERED TO BE RELEVANT**

| Category* | Citation of document, with indication, where appropriate, of the relevant passages | Relevant to claim No. |
|---|---|---|
| Y | KR 10-2020-0028931 A (SUMITOMO ELECTRIC INDUSTRIES, LTD.) 17 March 2020 (2020-03-17)<br>See paragraphs [0003], [0005], [0041]-[0046] and [0066]-[0072]; claim 11; and figure 2. | 1-17 |
| Y | JP 2017-200371 A (3M INNOVATIVE PROPERTIES CO.) 02 November 2017 (2017-11-02)<br>See paragraphs [0020] and [0032]; and figures 1-2. | 1-17 |
| Y | JP 2015-142476 A (SWCC SHOWA CABLE SYSTEMS CO., LTD. et al.) 03 August 2015 (2015-08-03)<br>See paragraph [0021]; and figure 2. | 2-3,15-16 |
| Y | KR 10-2020-0069967 A (LS CABLE & SYSTEM LTD.) 17 June 2020 (2020-06-17)<br>See paragraphs [0089] and [0098]; and figure 16. | 5,14,17 |
| Y | KR 10-1578628 B1 (ABB RESEARCH LTD.) 17 December 2015 (2015-12-17)<br>See paragraph [0037]; and figure 1. | 6-9 |

☐ Further documents are listed in the continuation of Box C.      ☑ See patent family annex.

| | | | |
|---|---|---|---|
| *    Special categories of cited documents: | "T" | later document published after the international filing date or priority date and not in conflict with the application but cited to understand the principle or theory underlying the invention | |
| "A"   document defining the general state of the art which is not considered to be of particular relevance | | | |
| "D"   document cited by the applicant in the international application | "X" | document of particular relevance; the claimed invention cannot be considered novel or cannot be considered to involve an inventive step when the document is taken alone | |
| "E"   earlier application or patent but published on or after the international filing date | | | |
| "L"   document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art | |
| "O"   document referring to an oral disclosure, use, exhibition or other means | "&" | document member of the same patent family | |
| "P"   document published prior to the international filing date but later than the priority date claimed | | | |

| Date of the actual completion of the international search | Date of mailing of the international search report |
|---|---|
| **11 October 2023** | **11 October 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/008590**

| Patent document cited in search report | | | Publication date (day/month/year) | Patent family member(s) | | | Publication date (day/month/year) |
|---|---|---|---|---|---|---|---|
| KR | 10-2020-0028931 | A | 17 March 2020 | CN | 110915087 | A | 24 March 2020 |
| | | | | CN | 110915087 | B | 16 April 2021 |
| | | | | JP | 6737407 | B2 | 05 August 2020 |
| | | | | KR | 10-2480532 | B1 | 23 December 2022 |
| | | | | US | 10840690 | B2 | 17 November 2020 |
| | | | | US | 2020-0203942 | A1 | 25 June 2020 |
| | | | | WO | 2019-012885 | A1 | 17 January 2019 |
| JP | 2017-200371 | A | 02 November 2017 | JP | 6823941 | B2 | 03 February 2021 |
| JP | 2015-142476 | A | 03 August 2015 | CN | 104821538 | A | 05 August 2015 |
| | | | | CN | 104821538 | B | 03 July 2018 |
| | | | | JP | 2015-142477 | A | 03 August 2015 |
| | | | | JP | 5970005 | B2 | 17 August 2016 |
| | | | | JP | 6258715 | B2 | 10 January 2018 |
| KR | 10-2020-0069967 | A | 17 June 2020 | None | | | |
| KR | 10-1578628 | B1 | 17 December 2015 | CN | 103718404 | A | 09 April 2014 |
| | | | | CN | 103718404 | B | 10 April 2018 |
| | | | | EP | 2730002 | A2 | 14 May 2014 |
| | | | | EP | 2730002 | B1 | 28 July 2021 |
| | | | | JP | 2014-518500 | A | 28 July 2014 |
| | | | | JP | 5805865 | B2 | 10 November 2015 |
| | | | | KR | 10-2014-0030330 | A | 11 March 2014 |
| | | | | US | 2014-0116746 | A1 | 01 May 2014 |
| | | | | US | 9263875 | B2 | 16 February 2016 |
| | | | | WO | 2013-004748 | A2 | 10 January 2013 |
| | | | | WO | 2013-004748 | A3 | 07 November 2013 |

Form PCT/ISA/210 (patent family annex) (July 2022)